# EUROPÄISCHE PATENTSCHRIFT

(11) **EP 4 193 220 B1**
(45) Veröffentlichungstag und Bekanntmachung des Hinweises auf die Patenterteilung: **11.09.2024**
(21) Anmeldenummer: 21745813.2
(22) Anmeldetag: 16.07.2021
(51) Int. Cl.: G03B 17/12, G03B 17/14, G03B 30/00

(54) **KAMERAMODUL, VERFAHREN ZUR HERSTELLUNG EINES KAMERAMODULS**
CAMERA MODULE AND METHOD FOR PRODUCING A CAMERA MODULE
MODULE DE CAMÉRA ET PROCÉDÉ DE PRODUCTION D'UN MODULE DE CAMÉRA

(30) Priorität: 04.08.2020 DE 102020209775
(43) Veröffentlichungstag der Anmeldung: 14.06.2023
(73) Patentinhaber: Robert Bosch GmbH, 70442 Stuttgart (DE)
(72) Erfinder: NUJO CARRASCOZA, Joao Fernando, 70378 Stuttgart (DE)
(86) Internationale Anmeldenummer: PCT/EP2021/069999
(87) Internationale Veröffentlichungsnummer: WO 2022/028861

(56) Entgegenhaltungen:
- JP-A- 2008 199 835
- US-A- 4 420 239
- US-A1- 2018 203 202

## Beschreibung

Die vorliegende Erfindung betrifft ein Kameramodul mit den Merkmalen des Oberbegriffs des Anspruchs 1. Das Kameramodul ist insbesondere im Automotivebereich, beispielsweise zur Umfeldüberwachung, einsetzbar.

Alternative Einsatzgebiete stellen mobile Endgeräte aus dem Konsumerbereich und/oder professionelle bzw. wissenschaftliche Anwendungen dar.

Darüber hinaus betrifft die Erfindung ein Verfahren zur Herstellung eines Kameramoduls.

### Stand der Technik

Ein gattungsgemäßes Kameramodul umfasst ein Objektiv mit einer elektrischen Schnittstelle und Mitteln zur elektrischen Kontaktierung des Objektivs im Bereich der elektrischen Schnittstelle. Das Objektiv ist demnach mit elektrischer Energie versorgbar, zum Beispiel zum Betreiben einer Linsen- bzw. Objektivheizung, mit deren Hilfe ein Beschlagen und/oder Vereisen einer Linse, insbesondere der Frontlinse, des Objektivs verhindert werden soll. Alternativ oder ergänzend kann die elektrische Energie zum Betreiben einer Autofokuseinrichtung, einer aktiven Bildstabilisierung, einer variablen Blende oder dergleichen verwendet werden.

Bekannte Mittel zur elektrischen Kontaktierung eines Kameraobjektivs stellen Steckverbinder dar. Mit Hilfe der Steckverbinder kann eine Steckverbindung zwischen dem Objektiv und einer internen Elektronik des Kameramoduls oder mit einer externen Spannungsversorgung hergestellt werden. Die Herstellung einer Steckverbindung mit einer internen Elektronik stellt sich jedoch aufgrund der meist sehr beengten Bauraumverhältnisse als schwierig dar, so dass sie nicht für die Großserienfertigung geeignet ist. Die Herstellung einer Steckverbindung mit einer externen Spannungsversorgung erfordert einen an das Kameramodul angepassten Bauraum. Zudem ist die externe Kontaktierung Umwelteinflüssen, wie beispielsweise Feuchtigkeit, ausgesetzt, welche die Zuverlässigkeit und/oder die Lebensdauer des Kameramoduls negativ beeinflussen können.

US 4 420 239 A offenbart eine Kamera/Objektiv Kombination mit einer elektrischen Schnittstelle zwischen den beiden Modulen.

Eine weitere Problematik bei der elektrischen Kontaktierung ergibt sich dadurch, dass bei der Montage des Kameramoduls das Objektiv nicht nur elektrisch kontaktiert, sondern ferner in Bezug auf einen Bildsensor des Kameramoduls ausgerichtet werden muss. Dies geschieht beispielsweise über ein "Active Alignment", wobei das Objektiv über fünf Achsen zum Bildsensor ausgerichtet wird. Nach dem Ausrichten wird die Objektivposition über einen aushärtenden Klebstoff fixiert. Die elektrische Kontaktierung des Objektivs muss demnach in der Lage sein, die Bewegungen des Objektivs über fünf Achsen beim Ausrichten auszugleichen. Dies ermöglichen beispielsweise Federkontakte. Diese führen jedoch in der Regel zu einer unzulässigen Beanspruchung des zur Fixierung eingesetzten Klebstoffs, da dieser bis zum vollständigen Aushärten nur geringe Kräfte aufnehmen kann.

Der vorliegenden Erfindung liegt daher die Aufgabe zugrunde, eine elektrische Kontaktierung eines Objektivs eines Kameramoduls anzugeben, die möglichst kraftarm ist und zudem in der Lage ist, die Bewegungen des Objektivs beim "Active Alignment" auszugleichen.

Zur Lösung der Aufgabe werden das Kameramodul mit den Merkmalen des Anspruchs 1 sowie das Verfahren mit den Merkmalen des Anspruchs 7 vorgeschlagen. Vorteilhafte Ausgestaltungen der Erfindung sind den jeweiligen Unteransprüchen zu entnehmen.

### Offenbarung der Erfindung

Das vorgeschlagene Kameramodul umfasst ein Objektiv mit einer elektrischen Schnittstelle sowie einen Objektivhalter mit Mitteln zur elektrischen Kontaktierung des Objektivs im Bereich der elektrischen Schnittstelle, wobei die Mittel zur elektrischen Kontaktierung ferner mit einer Elektronik, insbesondere mit einer Leiterplatte, des Kameramoduls verbunden sind. Erfindungsgemäß umfassen die

Mittel zur elektrischen Kontaktierung zwei Kontaktfedern aufweisende Kontaktringe, die einen ersten und einen zweiten Pol ausbilden und durch einen zwischenliegenden Abstandhalter elektrisch isoliert sind. Die beiden Kontaktringe sind dabei über den Objektivhalter und den Abstandhalter beweglich gelagert.

Obgleich die elektrische Kontaktierung des Objektivs bei dem vorgeschlagenen Kameramodul über Kontaktfedern bewirkt wird, ist diese Kontaktierung kraftarm. Denn die Kontaktfedern sind an beweglich gelagerten Kontaktringen angeordnet, so dass die Objektivbewegungen über Bewegungen der Kontaktringe ausgeglichen werden können. Die Federkraft der Kontaktfedern ist hierzu bevorzugt derart eingestellt, dass bei einer Bewegung des Objektivs die Kontaktfedern möglichst nicht verformt werden, sondern lediglich oder vorrangig die Kontaktringe bewegt werden.

Zudem weisen die Kontaktringe der vorgeschlagenen Mittel zur elektrischen Kontaktierung jeweils mehrere Kontaktfedern auf, die über den Innenumfang des jeweiligen Kontaktrings möglichst gleichmäßig verteilt, vorzugsweise in gleichem Winkelabstand zueinander, angeordnet sind, so dass das Objektiv über seinen Außenumfang nicht einseitig, sondern gleichmäßig belastet wird. Dies ist möglich, da die Kontaktringe einschließlich ihrer Kontaktfedern jeweils einen der beiden Pole der elektrischen Kontaktierung ausbilden. Die beiden Pole der elektrischen Kontaktierung sind demnach über den Abstandhalter in einem axialen Abstand und nicht - wie sonst üblich - in einem Winkelabstand zueinander angeordnet.

Gemäß einer bevorzugten Ausführungsform der Erfindung umfasst die elektrische Schnittstelle zwei außenumfangseitig am Objektiv angeordnete Kontaktbahnen, die den Kontaktringen an einem Ringspalt zwischen dem Objektiv und dem Objektivhalter gegenüberliegen. Das heißt, dass jedem Kontaktring bzw. jedem Pol eine Kontaktbahn zugeordnet ist. Der Ringspalt wird dabei durch die Kontaktfedern der Kontaktringe überbrückt, so dass diese an den Kontaktbahnen unter einer Vorspannung anliegen. Die Vorspannung stellt beim Ausrichten des Objektivs den Kontakt der Kontaktfedern mit den Kontaktbahnen sicher.

Des Weiteren wird vorgeschlagen, dass die Kontaktringe über Kontaktbeine, die an ihrem freien Ende abgewinkelt sind, in axialer Richtung federnd am Objektivhalter abgestützt sind. Die federnde Abstützung ermöglicht Bewegungen der Kontaktringe in axialer Richtung, nachfolgend als z-Richtung bezeichnet. Zugleich ist über die federnde Abstützung sichergestellt, dass die Kontaktringe während einer Bewegung am Objektivhalter sicher gehalten sind. Die Kontaktbeine sind vorzugsweise jeweils radial außen an den Kontaktringen angeordnet und erstrecken sich von dem jeweiligen Kontaktring in axialer bzw. in z-Richtung. Die abgewinkelten Endabschnitte der Kontaktbeine erstrecken sich vorzugsweise nach radial außen und hintergreifen den Objektivhalter.

In Weiterbildung der Erfindung wird vorgeschlagen, dass die Kontaktbeine am Objektivhalter angeordnete Leiterbahnen kontaktieren. Über die Leiterbahnen kann unmittelbar oder mittelbar die Verbindung zur Elektronik, insbesondere zur Leiterplatte, des Kameramoduls hergestellt sein. Die Kontaktierung der Kontaktbeine mit den Leiterbahnen erfolgt vorzugsweise über die abgewinkelten freien Enden, über welche die Kontaktbeine federnd am Objektivhalter abgestützt sind. Das heißt, dass der Bereich der Abstützung und der Kontaktierung zusammenfallen. Auf diese Weise ist sichergestellt, dass unabhängig von einer Bewegung der beiden Kontaktringe der Kontakt der Kontaktbeine mit den Leiterbahnen erhalten bleibt.

Die Leiterbahnen sind vorzugsweise in einer Ebene auf einer Unterseite einer Schulter des Objektivhalters angeordnet. Diese Anordnung ermöglicht, dass die abgewinkelten freien Enden der Kontaktbeine der beiden Kontaktringe den Objektivhalter hintergreifen, so dass die Kontaktringe einerseits sicher am Objektivhalter gehalten sind, andererseits sich weiterhin relativ in Bezug auf den Objektivhalter und den Abstandhalter bewegen können. Der Objektivhalter, die Kontaktringe und der Abstandhalter können somit vormontiert und als vormontierte Baugruppe eingebaut werden.

Ferner wird vorgeschlagen, dass die Leiterbahnen kreisbogenförmig verlaufen, so dass eine möglichst große Fläche zur Abstützung und Kontaktierung der Kontaktbeine der beiden Kontaktringe geschaffen wird. Vorzugsweise liegen sich die beiden kreisbogenförmigen Leiterbahnen an einer Öffnung des Objektivhalters zur Aufnahme des Objektivs gegenüber. Über die Öffnung können zugleich die Kontaktbeine an die Leiterbahnen geführt werden. Der kreisbogenförmige Verlauf der Leiterbahnen erstreckt sich jeweils über einen Winkelbereich, der kleiner als 180° ist, so dass die Leiterbahnen elektrisch voneinander isoliert sind. Denn jede Leiterbahn ist einem Kontaktring, das heißt einem Pol zugeordnet. Um dennoch alle Kontaktbeine eines Kontaktrings in axialer Richtung federnd am Objektivhalter abstützen zu können, kann der kreisbogenförmige Verlauf einer Leiterbahn bereichsweise unterbrochen sein. Dieser Bereich kann zur Abstützung eines Kontaktbeins eines Kontaktrings genutzt werden, der den jeweils anderen Pol ausbildet. Die Kontaktbeine eines Kontaktrings können somit in gleichem Winkelabstand zueinander am jeweiligen Kontaktring angeordnet sein, so dass dieser optimal abgestützt ist.

Des Weiteren wird vorgeschlagen, dass die Leiterbahnen jeweils über ein Kontaktelement, das vorzugsweise abgewinkelt ausgeführt ist, mit der Elektronik, insbesondere mit der Leiterplatte des Kameramoduls verbunden sind. Mit Hilfe der Kontaktelemente kann somit ein axialer Abstand zwischen den Leiterbahnen und der Elektronik bzw. Leiterplatte überbrückt werden. Bei einer abgewinkelten Ausführung der Kontaktelemente kann zugleich ein radialer Abstand überbrückt werden.

Zur Lösung der eingangs genannten Aufgabe wird ferner ein Verfahren zur Herstellung eines Kameramoduls mit einem Objektiv, einem Objektivhalter und einem Bildsensor vorgeschlagen. Bei dem Verfahren wird das Objektiv in den Objektivhalter eingesetzt, elektrisch kontaktiert und unter Aufrechterhaltung der elektrischen Kontaktierung in Bezug auf den Bildsensor ausgerichtet. Erfindungsgemäß wird das Objektiv über Kontaktfedern zweier beweglich gelagerter und elektrisch voneinander isolierter Kontaktringe elektrisch kontaktiert, so dass Bewegungen des Objektivs beim Ausrichten in Bezug auf den Bildsensor über Bewegungen der Kontaktringe ausgeglichen werden.

Die bewegliche Lagerung der beiden Kontaktringe trägt zu einer kraftarmen elektrischen Kontaktierung des Objektivs bei und ermöglicht zugleich einen Ausgleich der Objektivbewegungen beim Ausrichten. Um ein Ausrichten des Objektivs über fünf Achsen zu ermöglichen, ist die bewegliche Lagerung bevorzugt derart gestaltet, dass jeder der Ringe in alle drei Raumrichtungen, das heißt in x-, y-, und z-Richtung bewegt werden kann.

Zur elektrischen Kontaktierung kann das Objektiv außenumfangseitig eine elektrische Schnittstelle aufweisen, die beispielsweise aus zwei umlaufenden Kontaktbahnen besteht, so dass die Kontaktfedern der beiden Kontaktringe an diesen zur Anlage gebracht werden können.

Bevorzugt ist jedem Kontaktring mit den zugehörigen Kontaktfedern eine Kontaktbahn am Objektiv zugeordnet. Denn über jeden Kontaktring mit den zugehörigen Kontaktfedern wird ein Pol der elektrischen Kontaktierung ausgebildet. Dies ist möglich, da die beiden Kontaktringe über den zwischenliegenden Abstandhalter elektrisch isoliert sind. Der Abstandhalter ist hierzu aus einem elektrisch isolierenden Material, beispielsweise aus Kunststoff hergestellt. Vorzugsweise wird ein ringförmiger Abstandhalter verwendet.

Des Weiteren bevorzugt sind die Kontaktringe über den Objektivhalter und das Abstandelement beweglich gelagert. Das heißt, dass die Kontaktringe beweglich gegenüber dem Objektivhalter und gegenüber dem Abstandhalter sind. Somit können die beiden Kontaktringe auch unabhängig voneinander bewegt werden.

Vorteilhafterweise werden der Objektivhalter, die Kontaktringe und der Abstandhalter vormontiert und als vormontierte Baugruppe eingebaut. Die Halterung der Kontaktringe am Objektivhalter kann über Kontaktbeine bewirkt werden, die an ihrem freien Ende abgewinkelt sind am Objektivhalter in axialer Richtung bzw. in z-Richtung federnd abgestützt sind. Somit sind die Kontaktringe einerseits sicher gehalten, andererseits weiterhin in alle drei Raumrichtungen, das heißt in x-, y-, und z-Richtung beweglich. Der Abstandhalter wird über die Kontaktringe gehalten.

Das vorgeschlagene Verfahren ist zur Herstellung des zuvor beschriebenen erfindungsgemäßen Kameramoduls geeignet. Die Verbindung der Kontaktringe mit einer Elektronik, insbesondere mit einer Leiterplatte, des Kameramoduls kann demzufolge analog der Verbindung des zuvor beschriebenen Kameramoduls ausgeführt werden.

Eine bevorzugte Ausführungsform der Erfindung wird nachfolgend anhand der beigefügten Zeichnungen näher erläutert. Diese zeigen:
- Fig. 1: eine Schnittansicht durch ein erfindungsgemäßes Kameramodul,
- Fig. 2: einen vergrößerten Ausschnitt der Fig. 1,
- Fig. 3: eine perspektivische Darstellung des Objektivhalters des Kameramoduls der Fig. 1 von schräg oben einschließlich der Mittel zur elektrischen Kontaktierung des Objektivs und
- Fig. 4: eine perspektivische Darstellung des Objektivhalters der Fig. 3 von
- schräg: unten.

### Ausführliche Beschreibung der Zeichnungen

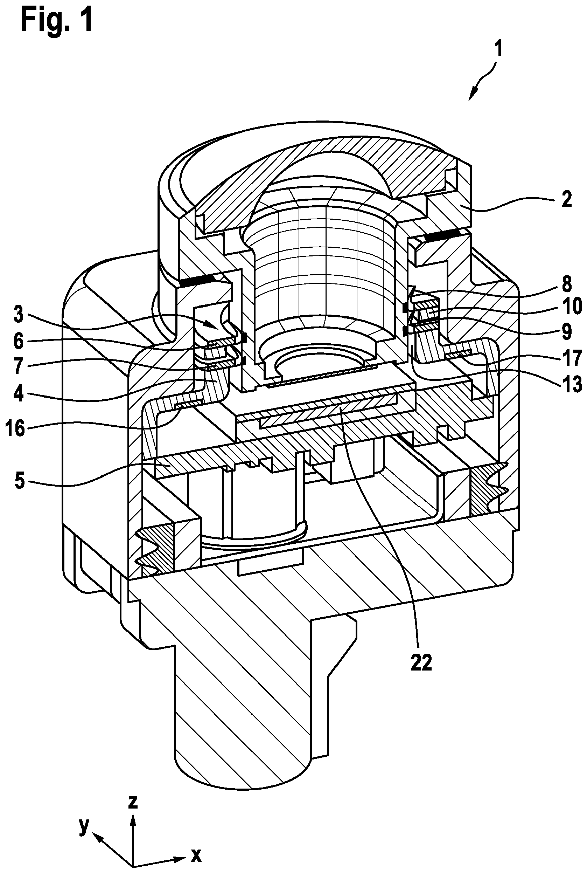

Das in der Fig. 1 dargestellte erfindungsgemäße Kameramodul 1 umfasst ein Objektiv 2, einen Objektivhalter 4 und einen Bildsensor 22. Bei der Herstellung des Kameramoduls 1, insbesondere bei der Montage, muss das Objektiv 2 elektrisch kontaktiert und in Bezug auf den Bildsensor 22 ausgerichtet werden. Dies erfordert eine elektrische Kontaktierung, welche die zum Ausrichten benötigten Objektivbewegungen zulässt bzw. ausgleicht, damit die elektrische Kontaktierung aufrecht erhalten bleibt.

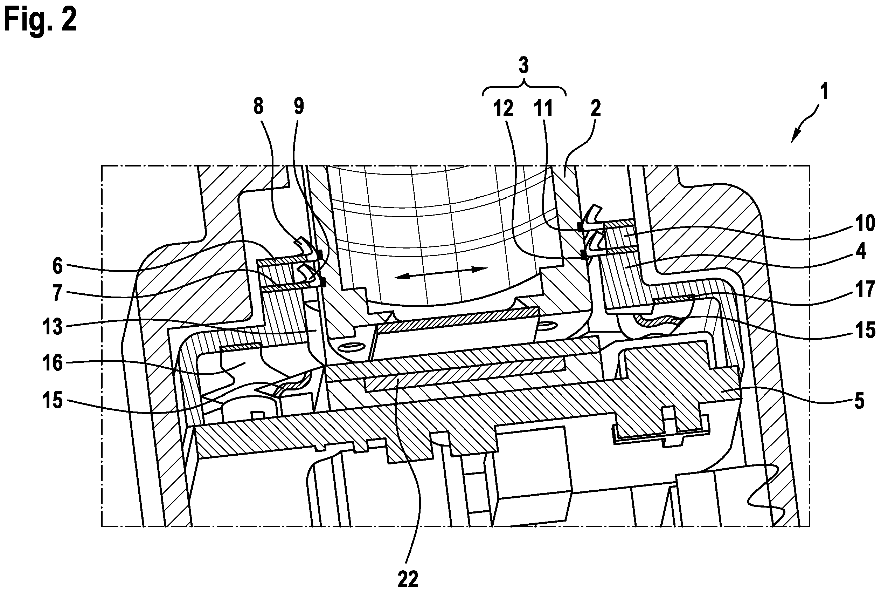

Das dargestellte Kameramodul 1 weist hierzu einen Objektivhalter 4 auf, der Mittel zur elektrischen Kontaktierung des Objektivs 2 im Bereich einer elektrischen Schnittstelle 3 umfasst. Die elektrische Schnittstelle 3 wird vorliegend durch zwei außenumfangseitig am Objektiv 2 angeordnete, umlaufende Kontaktbahnen 11, 12 ausgebildet (siehe Fig. 2). Die Mittel zur Kontaktierung der am Objektiv 2 ausgebildeten elektrischen Schnittstelle 3 umfassen zwei Kontaktringe 6, 7, die beweglich gelagert sind und Kontaktfedern 8, 9 aufweisen, die einen Ringspalt 13 zwischen dem Objektivhalter 4 und dem Objektiv 2 überbrücken und unter einer Vorspannung an den Kontaktbahnen 11, 12 des Objektivs 2 anliegen. Jeder Kontaktring 6, 7 bildet einen Pol der elektrischen Kontaktierung aus, so dass jedem Kontaktring 6, 7 eine eigene Kontaktbahn 11, 12 zugeordnet ist. Die beiden Kontaktringe 6, 7 sind zudem über einen zwischenliegenden ringförmigen Abstandhalter 10 elektrisch isoliert.

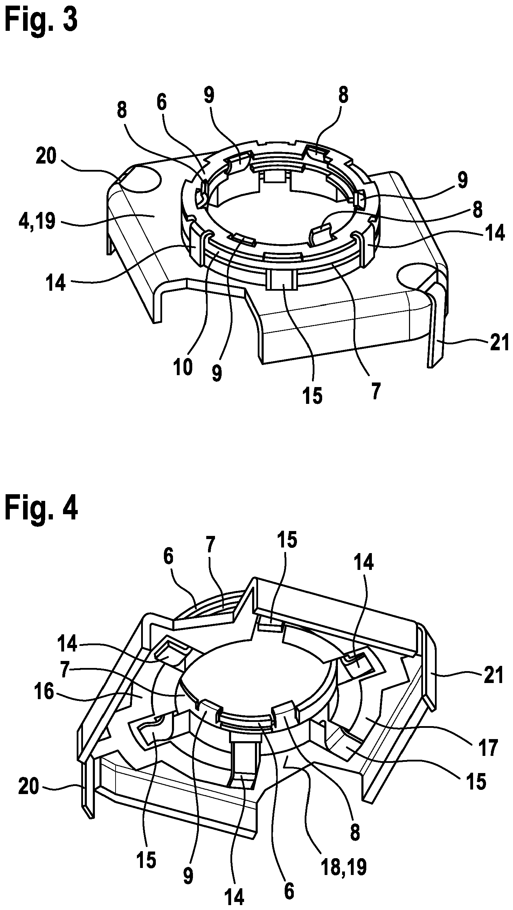

Zur Verbindung der Kontaktringe 6, 7 mit einer Elektronik bzw. mit einer Leiterplatte 5 des Kameramoduls 1 weisen die Kontaktringe 6, 7 jeweils radial außen ansetzende Kontaktbeine 14, 15 auf. Jeder Kontaktring 6, 7weist vorliegend drei in gleichem Winkelabstand zueinander angeordnete Kontaktfedern 8, 9 sowie drei in gleichem Winkelabstand zueinander angeordnete Kontaktbeine 14, 15 auf, wobei die Winkellage der Kontaktbeine 14, 15 eines Kontaktrings 6, 7 zur Winkellage der zugehörigen Kontaktfedern 8, 9 jeweils um einen halben Winkelabstand versetzt ist (siehe Figuren 3 und 4). Gleiches gilt in Bezug auf die Winkellage der Kontaktbeine 14 eines ersten Kontaktrings 6 zur Winkellage der Kontaktbeine 15 eines zweiten Kontaktrings 7.

Die Kontaktbeine 14, 15 sind endseitig abgewinkelt ausgeführt, so dass sie unter eine Schulter 19 des Objektivhalters 4 greifen. Sie liegen demnach an einer Unterseite 18 der Schulter 19 an (siehe Figuren 2 und 4). An der Unterseite 18 weist die Schulter 19 Leiterbahnen 16, 17 auf, die kreisbogenförmige verlaufen, so dass jeweils zwei Kontaktbeine 14, 15 eines Kontaktrings 6, 7 eine Leiterbahn 16, 17 kontaktieren (siehe Fig. 4). Um eine Kontaktierung der Leiterbahn 16, 17 mit einem Kontaktbein 14, 15 des andern Pols zu verhindern, ist der kreisbogenförmige Verlauf der Leiterbahnen 16, 17 im Bereich dieses einen Kontaktbeins 14, 15 jeweils unterbrochen. Da sich die Leiterbahnen 16, 17 zudem nur über einen Winkelbereich erstrecken, der kleiner als 180° ist, sind sie auch untereinander über den Objektivhalter 4 elektrisch isoliert.

Die beiden Leiterbahnen 16, 17 sind wiederum über Kontaktelemente 20, 21, die vorliegend fahnenartig ausgebildet sind und sich am Objektivhalter 4 diametral gegenüberliegen (siehe Fig. 4), mit der Leiterplatte 5 des Kameramoduls 1 verbunden.

## Patentansprüche

1. Kameramodul (1), umfassend ein Objektiv (2) mit einer elektrischen Schnittstelle (3) sowie einen Objektivhalter (4) mit Mitteln zur elektrischen Kontaktierung des Objektivs (2) im Bereich der elektrischen Schnittstelle (3), wobei die Mittel zur elektrischen Kontaktierung ferner mit einer Elektronik, insbesondere mit einer Leiterplatte (5), des Kameramoduls (1) verbunden sind, **dadurch gekennzeichnet, dass** die Mittel zur elektrischen Kontaktierung zwei Kontaktfedern (8, 9) aufweisende Kontaktringe (6, 7) umfassen, die einen ersten und einen zweiten Pol ausbilden und durch einen zwischenliegenden Abstandhalter (10) elektrisch isoliert sind, wobei die beiden Kontaktringe (6, 7) über den Objektivhalter (4) und den Abstandhalter (10) beweglich gelagert sind.

2. Kameramodul (1) nach Anspruch 1,
**dadurch gekennzeichnet, dass** die elektrische Schnittstelle (3) zwei außenumfangseitig am Objektiv (2) angeordnete Kontaktbahnen (11, 12) umfasst, die den Kontaktringen (6, 7) an einem Ringspalt (13) zwischen dem Objektiv (2) und dem Objektivhalter (4) gegenüberliegen, wobei der Ringspalt (13) durch die Kontaktfedern (8, 9) der Kontaktringe (6, 7) überbrückt wird, so dass diese an den Kontaktbahnen (11, 12) unter einer Vorspannung anliegen.

3. Kameramodul (1) nach Anspruch 1 oder 2,
**dadurch gekennzeichnet, dass** die Kontaktringe (6, 7) über Kontaktbeine (14, 15), die an ihrem freien Ende abgewinkelt sind, in axialer Richtung federnd am Objektivhalter (4) abgestützt sind.

4. Kameramodul (1) nach Anspruch 3,
**dadurch gekennzeichnet, dass** die Kontaktbeine (14, 15) am Objektivhalter (4) angeordnete Leiterbahnen (16, 17) kontaktieren.

5. Kameramodul (1) nach Anspruch 4,
**dadurch gekennzeichnet, dass** die Leiterbahnen (16, 17) in einer Ebene auf einer Unterseite (18) einer Schulter (19) des Objektivhalters (4) angeordnet sind und/oder kreisbogenförmig verlaufen.

6. Kameramodul (1) nach Anspruch 4 oder 5,
**dadurch gekennzeichnet, dass** die Leiterbahnen (16, 17) jeweils über ein Kontaktelement (20, 21), das vorzugsweise abgewinkelt ausgeführt ist, mit der Elektronik, insbesondere mit der Leiterplatte (5) des Kameramoduls (1) verbunden sind.

7. Verfahren zur Herstellung eines Kameramoduls (1) mit einem Objektiv (2), einem Objektivhalter (4) und einem Bildsensor (22), bei dem das Objektiv (2) in den Objektivhalter (4) eingesetzt, elektrisch kontaktiert und unter Aufrechterhaltung der elektrischen Kontaktierung in Bezug auf den Bildsensor (22) ausgerichtet wird,
**dadurch gekennzeichnet, dass** das Objektiv (2) über Kontaktfedern (8, 9) zweier beweglich gelagerter und elektrisch voneinander isolierter Kontaktringe (6, 7) elektrisch kontaktiert wird, so dass Bewegungen des Objektivs (2) beim Ausrichten in Bezug auf den Bildsensor (22) über Bewegungen der Kontaktringe (6, 7) ausgeglichen werden.

8. Verfahren nach Anspruch 7,
**dadurch gekennzeichnet, dass** über jeden Kontaktring (6, 7) mit den zugehörigen Kontaktfedern (8, 9) ein Pol der elektrischen Kontaktierung ausgebildet wird.

9. Verfahren nach Anspruch 7 oder 8,
**dadurch gekennzeichnet, dass** die Kontaktringe (6, 7) über den Objektivhalter (4) und das Abstandelement (10) beweglich gelagert werden.

10. Verfahren nach einem der Ansprüche 7 bis 9,
**dadurch gekennzeichnet, dass** der Objektivhalter (4), die Kontaktringe (6, 7) und der Abstandhalter (10) vormontiert und als vormontierte Baugruppe eingebaut werden.

## Claims

1. Camera module (1) comprising an objective (2) with an electrical interface (3), and comprising an objective holder (4) with means for electrically making contact with the objective (2) in the region of the electrical interface (3), wherein the means for electrically making contact are furthermore connected to an electronic system, in particular to a printed circuit board (5), of the camera module (1),
**characterized in that** the means for electrically making contact comprise two contact rings (6, 7) having contact springs (8, 9), which form a first and a second pole and are electrically insulated by an interposed spacer (10), wherein the two contact rings (6, 7) are movably supported via the objective holder (4) and the spacer (10).

2. Camera module (1) according to Claim 1,
**characterized in that** the electrical interface (3) comprises two contact paths (11, 12) which are arranged at the objective (2) on the outer periphery and lie opposite the contact rings (6, 7) at an annular gap (13) between the objective (2) and the objective holder (4), wherein the annular gap (13) is bridged by the contact springs (8, 9) of the contact rings (6, 7) such that they lie against the contact paths (11, 12) under a preload.

3. Camera module (1) according to Claim 1 or 2,
**characterized in that** the contact rings (6, 7) are resiliently supported by way of contact legs (14, 15), which are angled at their free end, in the axial direction on the objective holder (4).

4. Camera module (1) according to Claim 3,
**characterized in that** the contact legs (14, 15) make contact with conductor tracks (16, 17) arranged at the objective holder (4).

5. Camera module (1) according to Claim 4,
**characterized in that** the conductor tracks (16, 17) are arranged in a plane on a lower side (18) of a shoulder (19) of the objective holder (4) and/or have the shape of a circular arc.

6. Camera module (1) according to Claim 4 or 5,
**characterized in that** the conductor tracks (16, 17) are connected to the electronic system, in particular to the printed circuit board (5) of the camera module (1), in each case via a contact element (20, 21), which preferably has an angled design.

7. Method for producing a camera module (1) comprising an objective (2), an objective holder (4) and an image sensor (22), wherein the objective (2) is placed in the objective holder (4), is in electrical contact and is aligned with respect to the image sensor (22) while the electrical contact is maintained, **characterized in that** the objective (2) is in electrical contact via contact springs (8, 9) of two movably supported and electrically insulated contact rings (6, 7), so that movements of the objective (2) during the alignment with respect to the image sensor (22) are compensated for via movements of the contact rings (6, 7).

8. Method according to Claim 7,
**characterized in that** a pole of the electrical contact is formed via each contact ring (6, 7) with the associated contact springs (8, 9).

9. Method according to Claim 7 or 8,
**characterized in that** the contact rings (6, 7) are movably supported via the objective holder (4) and the spacer element (10).

10. Method according to any of Claims 7 to 9,
**characterized in that** the objective holder (4), the contact rings (6, 7) and the spacer (10) are pre-assembled and installed as a pre-assembled assembly.

## Revendications

1. Module de caméra (1), comprenant un objectif (2) pourvu d'une interface électrique (3), ainsi qu'un porte-objectif (4) pourvu de moyens pour la mise en contact électrique de l'objectif (2) dans la zone de l'interface électrique (3), dans lequel les moyens de mise en contact électrique sont en outre reliés à une électronique, en particulier à une carte de circuits imprimés (5), du module de caméra (1),
**caractérisé en ce que** les moyens de mise en contact électrique comprennent deux bagues de contact (6, 7) présentant des ressorts de contact (8, 9) et réalisant un premier et un deuxième pôle et étant électriquement isolés par un écarteur intermédiaire (10), les deux bagues de contact (6, 7) étant montées mobiles par l'intermédiaire du porte-objectif (4) et de l'écarteur (10).

2. Module de caméra (1) selon la revendication 1,
**caractérisé en ce que** l'interface électrique (3) comprend deux pistes de contact (11, 12) disposées au niveau de l'objectif (2) côté circonférence et qui sont opposées aux bagues de contact (6, 7) au niveau d'un interstice annulaire (13) entre l'objectif (2) et le porte-objectif (4), dans lequel l'interstice annulaire (13) est couvert par les ressorts de contact (8, 9) des bagues de contact (6, 7) de sorte que celles-ci s'appliquent contre les pistes de contact (11, 12) sous précontrainte.

3. Module de caméra (1) selon la revendication 1 ou la revendication 2,
**caractérisé en ce que** les bagues de contact (6, 7) prennent appui sur le porte-objectif (4) en faisant ressort dans la direction axiale, par l'intermédiaire de pattes de contact (14, 15) qui sont coudées à leur extrémité libre.

4. Module de caméra (1) selon la revendication 3,
**caractérisé en ce que** les pattes de contact (14, 15) entrent en contact avec des pistes conductrices (16, 17) disposées sur le porte-objectif (4).

5. Module de caméra (1) selon la revendication 4,
**caractérisé en ce que** les pistes conductrices (16, 17) sont disposées dans un plan sur une face inférieure (18) d'un épaulement (19) du porte-objectif (4) et/ou s'étendent en forme d'arc de cercle.

6. Module de caméra (1) selon la revendication 4 ou la revendication 5,
**caractérisé en ce que** les pistes conductrices (16, 17) sont reliées respectivement par l'intermédiaire d'un élément de contact (20, 21), qui est de préférence réalisé de manière coudée, à l'électronique, en particulier à la carte de circuits imprimés (5) du module de caméra (1).

7. Procédé de fabrication d'un module de caméra (1) comprenant un objectif (2), un porte-objectif (4) et un capteur d'image (22) dans lequel l'objectif (2) est inséré dans le porte-objectif (4), est mis en contact électrique et est aligné par rapport au capteur d'image (22) tout en maintenant la mise en contact électrique,
**caractérisé en ce que** l'objectif (2) est mis en contact électrique par deux ressorts de contact (8, 9) de deux bagues de contact (6, 7) montées mobiles et électriquement isolées l'une de l'autre de sorte que des mouvements de l'objectif (2) lors de l'alignement par rapport au capteur d'image (22) sont compensés par des mouvements des bagues de contact (6, 7).

8. Procédé selon la revendication 7,
**caractérisé en ce qu'**un pôle de la mise en contact électrique est réalisé par chaque bague de contact (6, 7) pourvue des ressorts de contact associés (8, 9).

9. Procédé selon la revendication 7 ou 8,
**caractérisé en ce que** les bagues de contact (6, 7) sont montées mobiles par l'intermédiaire du porte-objectif (4) et de l'écarteur (10).

10. Procédé selon l'une des revendications 7 à 9,
**caractérisé en ce que** le porte-objectif (4), les bagues de contact (6, 7) et l'écarteur (10) sont prémontés et installés sous forme de sous-ensemble prémonté.
